# EUROPÄISCHE PATENTANMELDUNG

(11) **EP 4 600 537 A1**
(43) Veröffentlichungstag der Anmeldung: **13.08.2025**
(21) Anmeldenummer: 25156346.6
(22) Anmeldetag: 06.02.2025
(51) Int. Cl.: F16L 37/23

(54) **SCHNELLKUPPLUNG**

(30) Priorität: 09.02.2024 DE 102024103743
(71) Anmelder: Wenz Kunststoff GmbH & Co. KG, 58511 Lüdenscheid (DE)
(72) Erfinder: Weller, Karsten, 58509 Lüdenscheid (DE)
(74) Vertreter: Patentanwälte Dörner & Kötter PartG mbB

(57) **Zusammenfassung**

Die Erfindung betrifft eine Schnellkupplung für Fluidleitungen, umfassend eine Kupplungsmuffe zur Aufnahme eines Kupplungssteckers und einer Verriegelungsvorrichtung, die eine auf der Kupplungsmuffe axial verschiebbare Verschlusshülse sowie wenigstens ein in einer Bohrung der Kupplungsmuffe radial bewegbares Verriegelungselement aufweist, welches wenigstens eine Verriegelungselement über die Verschlusshülse radial oder axial bewegbar und arretierbar ist, wobei an der Kupplungsmuffe (1) oder an der Verschlusshülse (3) ein temperaturgesteuertes Sperrmittel angeordnet ist, durch das bei Überschreiten einer Grenztemperatur eine Hemmung der axialen Bewegung der Verschlusshülse bewirkt ist. Das temperaturgesteuerte Sperrmittel umfasst ein Sperrteil (4) aus einer Formgedächtnislegierung.

## Beschreibung

Die Erfindung betrifft eine Schnellkupplung für Fluidleitungen nach dem Oberbegriff des Patentanspruchs 1.

Schnellkupplungen der vorgenannten Art sind in unterschiedlichsten Ausführungen bekannt und beispielsweise in der DE 26 17 620 A1 beschrieben. Derartige Schnellkupplungen dienen der Aufnahme eines Kupplungssteckers, der für den Eingriff der Verriegelungskugeln Vertiefungen oder eine Ringnut aufweist. Durch Verschieben der Verschlusshülse können die Verriegelungskugeln in die Nut der Vertiefungen des Kupplungssteckers hineinbewegt und dort radial arretiert werden, wodurch der Kupplungsstecker in der Kupplungsmuffe axial fixiert ist. Alternativ kann die Verschlusshülse auch drehbar auf der Kupplungsmuffe angeordnet sein. Dabei können die Verriegelungselemente, vorzugsweise Kugeln oder Zylinder, durch eine Drehung der Verschlusshülse in eine Vertiefung des Kupplungssteckers bewegt und dort arretiert werden, wodurch der Kupplungsstecker wiederum axial fixiert ist.

Schnellkupplungen der vorgenannten Art werden insbesondere auch zum Anschluss von Kühlleitungen von Temperiersystemen für Spritzgießanlagen eingesetzt. Hierbei kann das durch die Schnellkupplung fließende Kühlmedium Temperaturen von 70 °C und mehr erreichen. Wird eine Schnellkupplung eines solchen Systems gelöst, bevor die Kühlflüssigkeit hinreichend abgekühlt ist, kann es zu Brühverletzungen des Bedienpersonals kommen.

Zur Lösung dieser Problematik wird in der EP3564568 eine Schnellkupplung vorgeschlagen, bei der an der Kupplungsmuffe oder an der Verschlusshülse ein temperaturgesteuertes Sperrmittel angeordnet ist, dass bei Überschreiten einer Grenztemperatur in einen an der Verschlusshülse oder der Kupplungsmuffe angeordneten Hinterschnitt eingreift. Bei heißem Temperiermedium ist die Verschlusshülse gesperrt, so dass ein Lösen der Schnellkupplung bei noch heißem Temperiermedium nicht möglich ist. Als temperaturgesteuertes Sperrmittel wird ein Dehnstoffelement oder ein Bimetallteil vorgeschlagen, das sich bei Wärmeeinwirkung in Richtung des Hinterschnitts verformt.

Diese vorbekannte Schnellkupplung hat sich in der Praxis als wirksam erwiesen. Durch eine solche Schnellkupplung ist ein effektiver Schutz des Bedieners vor Brühverletzungen durch Lösen der Schnellkupplung bei noch heißer Temperierflüssigkeit gewährleistet.

Aufgabe der vorliegenden Erfindung ist es, die vorbekannte Schnellkupplung weiter zu verbessern. Gemäß der Erfindung umfasst das temperaturgesteuerte Sperrmittel ein Sperrteil aus einer Formgedächtnislegierung. Hierdurch sind nun unterschiedliche geometrische Ausgestaltungen des Sperrmittels und seiner mechanischen temperaturabhängigen Sperrwirkung ermöglicht.

Formgedächtnislegierungen sind Metalle, die temperaturabhängig zwei unterschiedliche Kristallstrukturen aufweisen können. Die Formänderung basiert auf einer temperaturabhängigen Gitterwandlung von der einen Struktur (Phase) zur anderen. Ein aus einer Formgedächtnislegierung gebildetes Sperrteil kann sehr große Kräfte ohne signifikante Ermüdungserscheinungen übertragen.

Formgedächtnislegierungen können sich an eine ursprüngliche Form "erinnern". Dieser Memory-Effekt ist durch eine einmalige Formänderung beim Aufheizen eines zuvor im martensitischen Zustand pseudoplastisch verformten Bauteils gekennzeichnet. Er gestattet nur eine einmalige Formänderung. Das erneute Abkühlen bewirkt keine Formänderung, nur eine intrinsische Gitteränderung (Austenit zu verzwillingtem Martensit). Zur Rückkehr in den Kaltzustand ist ein Rückstellelement, bspw. in Form einer Feder erforderlich. Es ist zwar auch möglich einer Formgedächtnislegierung durch den sogenannten Zweiweg-Effekt durch thermomechanische Behandlungszyklen zu trainieren, sodass sich das Bauteil an zwei Formen - eine bei hoher und eine bei niedriger Temperatur - erinnert. Das Bauteil ist jedoch beim Abkühlvorgang nicht in der Lage, Arbeit zu verrichten.

In Weiterbildung der Erfindung das Sperrteil in einer ersten Phase der Formgedächtnislegierung (niedrige Temperatur) eine die Kupplungsmuffe zumindest bereichsweise umgreifende Form auf. Hierdurch ist eine Beeinträchtigung der Bewegung der Verschlusshülse auf der Kupplungsmuffe vermieden.

In Ausgestaltung der Erfindung weist das Sperrteil in der zweiten Phase der Formgedächtnislegierung (hohe Temperatur) eine in einen Hinterschnitt der Verschlusshülse eingreifende und/oder an einer Anschlagkante der der Verschlusshülse anliegende Form auf. Hierdurch ist eine zuverlässige, temperaturabhängige Sperrung der Verschlusshülse ermöglicht.

In einer anderen Ausgestaltung der Erfindung weist das Sperrteil in einer ersten Phase der Formgedächtnislegierung (niedrige Temperatur) eine an der Innenmantelfläche der Verschlusshülse zumindest bereichsweise umlaufend anliegende Form auf. Dabei weist das Sperrteil bevorzugt in der zweiten Phase der Formgedächtnislegierung (hohe Temperatur) eine in einen Hinterschnitt Kupplungsmuffe eingreifende und/oder an einer Anschlagkante der Kupplungsmuffe anliegende Form auf. Hierdurch ist eine umlaufende gleichmäßige Sperrung der Verschlusshülse bei Überschreiten einer Grenztemperatur erzielt.

In einer weiteren Ausgestaltung der Erfindung ist das Sperrteil in einer umlaufenden Nut (15) der Kupplungsmuffe (1) oder der Verschlusshülse (3) angeordnet. Hierdurch ist eine Bündige Anordnung des Sperrteils an der Kupplungsmuffe oder der Verschlusshülse in der ersten, Niedrigtemperatur-Phase erzielt.

In Weiterbildung der Erfindung sind mehrere axial beabstandet zueinander angeordnete Sperrteile angeordnet. Hierdurch ist die Sperrwirkung erhöht.

In Ausgestaltung der Erfindung ist die Formgedächtnislegierung eine Nickel-Titan-Legierung oder eine Nickel-Titan-Kupfer-Legierung. Diese Legierungen erweisen sind als sehr belastungsstabil und sind darüber hinaus korrosionsfest.

In weiterer Ausgestaltung der Erfindung ist das Sperrteil mit einem Rückstellelement, vorzugsweise einer Feder verbunden, über das die Formänderung des Sperrteils beim Übergang von der zweiten Phase in die erste Phase unterstützt ist. Hierdurch ist eine zügige Verbringung des Sperrteils bei Unterschreiten einer Grenztemperatur in seine Ursprungsform erzielt.

Andere Weiterbildungen und Ausgestaltungen der Erfindung sind in den übrigen Ansprüchen angegeben. Ein Ausführungsbeispiel der Erfindung ist in den Zeichnungen dargestellt wird nachfolgend im Einzelnen beschrieben. Es zeigen:
- Figur 1:: die schematische Darstellung einer Schnellkupplung (Sperrteil in Freigabeposition);
- Figur 2:: die schematische Darstellung einer Schnellkupplung (Sperrteil in Sperrposition).

Die als Ausführungsbeispiel gewählte Schnellkupplung umfasst in bekannter Art und Weise eine Kupplungsmuffe 1, die mit Bohrungen 11 versehen ist, welche Verriegelungskugeln 12 aufnehmen. Die Bohrungen 11 sind nach radial innen konisch zulaufend ausgeführt, so dass ein vollständiger Durchtritt der Verriegelungskugeln 12 verhindert ist. Innen ist in der Kupplungsmuffe 1 eine Anschlusshülse 2 axial verschiebbar angeordnet, die über eine Feder 21 in Richtung der Verriegelungskugeln 12 vorgespannt an einem innen umlaufenden Absatz 13 anliegt. In dieser Position ist die radiale Bewegung der Verriegelungskugeln 12 durch die Anschlusshülse 2 verhindert. Weiterhin weist die Kupplungsmuffe 1 an ihrem den Bohrungen 11 entgegengesetzten Ende ein Außengewinde 14 zum Anschluss einer Leitung auf. Auf der Kupplungsmuffe 1 ist weiterhin in bekannter Art und Weise eine Verschlusshülse 3 axial verschiebbar angeordnet. Die Verschlusshülse 3 ist über eine Feder 31 in Richtung der Bohrungen 11 vorgespannt. Endseitig ist in der Verschlusshülse 3 innen umlaufend eine Nut 32 zum Hineingleiten der Verriegelungskugeln 12 bei entgegen der Vorspannung der Feder 31 in Entriegelungsrichtung positionierter Verschlusshülse 3 angeordnet.

Zum Anschluss eines - nicht dargestellten - Kupplungssteckers einer mit der Schnellkupplung zu verbindenden Leitung wird der Kupplungsstecker in die Kupplungsmuffe 1 eingeschoben, wobei die Anschlusshülse 2 entgegen der Vorspannkraft der Feder 21 in Richtung des Außengewindes 14 nach hinten geschoben wird. Hierdurch wird der Weg für die Verriegelungskugeln 12 freigemacht, die über die an diesen anliegende, über die Feder 31 vorgespannte Verschlusshülse 3 in eine hierfür in dem Kupplungsstecker angeordnete umlaufende Nut hineinbewegt werden. Der Kupplungsstecker ist so in der Kupplungsmuffe axial fixiert. Zum Lösen der Verbindung wird die Verschlusshülse 3 entgegen der Vorspannung der Feder 31 in Richtung des Außengewindes 14 bewegt, wodurch die Verriegelungskugeln 12 in die umlaufende Nut 32 der Verschlusshülse 3 hineingleiten können. In dieser Position kann der Kupplungsstecker aus der Kupplungsmuffe 1 hinausgezogen werden, wobei zugleich durch die Vorspannung der Feder 21 die Anschlusshülse 2 in ihre Ursprungsstellung zurückbewegt wird.

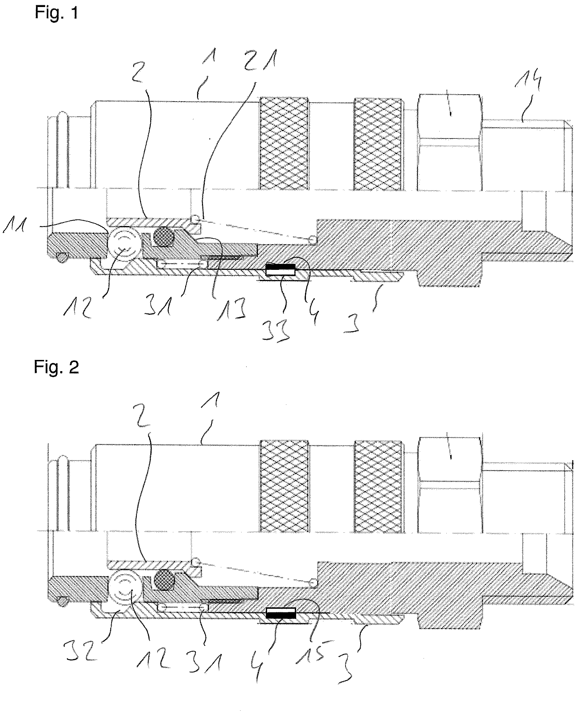

In die Kupplungsmuffe 1 ist weiterhin außen umlaufend eine Nut 15 eingebracht, die in Verschlussstellung der Verschlusshülse 3 mit einer in der Verschlusshülse 3 innen eingebrachten umlaufenden Nut 33 fluchtet. (In Figur 1 ist - lediglich zum besseren Verständnis - eine fluchtende Positionierung der Nuten 15, 33 dargestellt, obwohl die Verschlusshülse 3 sich nicht in Verriegelungsposition befindet. In der dargestellten Position der Verschlusshülse 3 sind die Nuten 15, 33 tatsächlich versetzt zueinander angeordnet.) Durch die beiden Nuten 15, 33 von Kupplungsmuffe 1 und Verschlusshülse 3 ist in Verschlussstellung der Verschlusshülse 3 ein umlaufender Kanal gebildet, dessen Querschnitt im Wesentlichen einem Rechteck entspricht.

In der Nut 15 der Kupplungsmuffe 1 ist ein streifenförmiges, aus einer Formgedächtnislegierung hergestelltes Sperrteil 4 angeordnet, das den Nutengrund bei einer Temperatur unterhalb der Grenztemperatur, die im Ausführungsbeispiel 50 °C beträgt, nahezu vollständig umfasst (vgl. Figur 1). Alternativ kann das Sperrteil den Nutengrund auch nur bereichsweise, beispielsweis um 90 Prozent seines Umfangs oder weniger umfassen. An seiner dem Nutengrund der Nut 15 zugewandten Seite ist das Sperrteil 4 mit wenigstens einer - nicht dargestellten - Rückstellfeder verbunden, durch die das Sperrteil 4 gegen den Nutengrund vorgespannt ist.

Das Sperrteil 4 ist derart ausgebildet, dass es bei Anliegen einer Grenztemperatur, die im Ausführungsbeispiel 50 °C beträgt, gegen die Vorspannkraft der wenigstens einen Rückstellfeder einen aufgespreizten Zustand einnimmt, wodurch er in die Nut 33 der Verschlusshülse 3 eingreift, wodurch die Verschlusshülse 3 festgelegt ist. Ein Verschieben der Verschlusshülse 3 entlang der Kupplungsmuffe 1 ist in dieser Position des Sperrteils 4 verhindert. Diese Sperrstellung der Sperrteils ist schematisch in Figur 2 dargestellt. Wird die Grenztemperatur nachfolgend wieder unterschritten, nimmt das Sperrelement 4, unterstützt durch die Vorspannkraft der - nicht dargestellten - wenigstens einen Rückstellfeder, wieder seine ursprüngliche Form ein.

In einer weiteren - nicht dargestellten - Ausführungsform ist das Sperrteil 4 in der Nut 33 der Verschlusshülse 3 angeordnet und liegt an dem Nutengrund der Nut 33 bei einer Temperatur unterhalb der Grenztemperatur, die im Ausführungsbeispiel 50 °C beträgt, diesen etwa 70 Prozent seines Umfangs einnehmend an. An seiner dem Nutengrund der Nut 33 zugewandten Seite ist das Sperrteil 4 wiederum mit wenigstens einer - nicht dargestellten - Rückstellfeder verbunden, durch die das Sperrteil 4 gegen den Nutengrund vorgespannt ist. Das Sperrteil 4 ist in dieser Ausführungsform derart ausgebildet, dass es bei Anliegen einer Grenztemperatur, die im Ausführungsbeispiel 50 °C beträgt, entgegen der Vorspannung der wenigstens einen Rückstellfeder einen verengten Zustand mit verringertem Innendurchmesser einnimmt, wodurch er in die Nut 15 der Kupplungsmuffe 1 eingreift, wodurch die Verschlusshülse 3 wiederum festgelegt ist. Ein Verschieben der Verschlusshülse 3 entlang der Kupplungsmuffe 1 ist in dieser Position des Sperrteils 4 ebenso verhindert.

In einer - nicht dargestellten - alternativen Ausgestaltung einer Schnellkupplung kann eine drehbar angeordnete Anschlusshülse vorhanden sein, in der eine bereichsweise umlaufende Nut zum Hineingleiten der Verriegelungskugeln in einer definierten Drehstellung der Verschlusshülse angeordnet ist. Die Verschlusshülse ist hier durch eine Feder, beispielsweise eine Torsionsfeder in Richtung der Bohrungen vorgespannt. Ein Verdrehen der Verschlusshülse entgegen der Vorspannung dieser Feder bewirkt eine radiale Bewegung Verriegelungskugeln in die Nut, wodurch die Entriegelung bewirkt ist. Bei dieser Lösung ist das Sperrteil derart angeordnet, dass bei Überschreiten einer Grenztemperatur eine Drehung der Verschlusshülse durch das Sperrteil verhindert wird.

## Patentansprüche

1. Schnellkupplung für Fluidleitungen, umfassend eine Kupplungsmuffe zur Aufnahme eines Kupplungssteckers und einer Verriegelungsvorrichtung, die eine auf der Kupplungsmuffe axial verschiebbare und/ oder drehbare Verschlusshülse sowie wenigstens ein in einer Ausnehmung der Kupplungsmuffe bewegbares Verriegelungselement aufweist, welches wenigstens eine Verriegelungselement über die Verschlusshülse bewegbar und arretierbar ist, wobei an der Kupplungsmuffe (1) oder an der Verschlusshülse (3) ein temperaturgesteuertes Sperrmittel angeordnet ist, durch das bei Überschreiten einer Grenztemperatur eine Hemmung der axialen Bewegung und/oder der Drehbewegung der Verschlusshülse bewirkt ist, **dadurch gekennzeichnet, dass** das. temperaturgesteuerte Sperrmittel ein Sperrteil (4) aus einer Formgedächtnislegierung umfasst.

2. Schnellkupplung nach Anspruch 1, **dadurch gekennzeichnet, dass** das Sperrteil (4) in einer ersten Phase der Formgedächtnislegierung eine die Kupplungsmuffe (1) zumindest bereichsweise umgreifende Form aufweist.

3. Schnellkupplung nach Anspruch 1 oder 2, **dadurch gekennzeichnet, dass** das Sperrteil (4) in der zweiten Phase der Formgedächtnislegierung eine in einen Hinterschnitt der Verschlusshülse (3) eingreifende und/oder an einer Anschlagkante der der Verschlusshülse (3) anliegende Form aufweist.

4. Schnellkupplung nach Anspruch 1, **dadurch gekennzeichnet, dass** das Sperrteil (4) in einer ersten Phase der Formgedächtnislegierung eine an der Innenmantelfläche der Verschlusshülse (3) zumindest bereichsweise umlaufend anliegende Form aufweist.

5. Schnellkupplung nach Anspruch 4, **dadurch gekennzeichnet, dass** das Sperrteil (4) in der zweiten Phase der Formgedächtnislegierung eine in einen Hinterschnitt Kupplungsmuffe (1) eingreifende und/oder an einer Anschlagkante der Kupplungsmuffe (1) anliegende Form aufweist.

6. Schnellkupplung nach einem der vorgenannten Ansprüche, **dadurch gekennzeichnet, dass** das Sperrteil (4) in einer umlaufenden Nut (15, 33) der Kupplungsmuffe (1) oder der Verschlusshülse (3) angeordnet ist.

7. Schnellkupplung nach Anspruch 2 oder 3, **dadurch gekennzeichnet, dass** das Sperrteil (4) als Formgedächtnislegierungstreifen ausgebildet ist.

8. Schnellkupplung nach einem der vorgenannten Ansprüche, **dadurch gekennzeichnet, dass** mehrere axial beabstandet zueinander angeordnete Sperrteile (4) angeordnet sind.

9. Schnellkupplung nach einem der vorgenannten Ansprüche, **dadurch gekennzeichnet, dass** die Formgedächtnislegierung eine Nickel-TitanLegierung oder eine Nickel-Titan-Kupfer-Legierung ist.

10. Schnellkupplung nach einem der vorgenannten Ansprüche, **dadurch gekennzeichnet, dass** das Sperrteil mit einem Rückstellelement, vorzugsweise einer Feder verbunden ist, über das die Formänderung des Sperrteil beim Übergang von der zweiten Phase in die erste Phase unterstützt ist.

11. Schnellkupplung nach einem der vorgenannten Ansprüche, **dadurch gekennzeichnet, dass** das wenigstens eine Verriegelungselement eine Kugel oder ein Zylinder ist.

12. Schnellkupplung nach Anspruch 11, **dadurch gekennzeichnet, dass** die Ausnehmung der Kupplungsmuffe durch eine Bohrung oder ein Langloch gebildet ist, wobei das wenigstens eine Verriegelungselement in der Bohrung oder dem Langloch radial bewegbar ist.
